# EUROPEAN PATENT SPECIFICATION

(11) **EP 1 607 293 B1**
(45) Date of publication and mention of the grant of the patent: **07.05.2008**
(21) Application number: 05020372.8
(22) Date of filing: 29.08.2002
(51) Int. Cl.: B60S 1/38, B29C 47/00

(54) **Rubber profile and a method for the manufacturing thereof**
Gummiprofil und Verfahren zur dessen Herstellung
Profilé en caoutchouc et méthode pour sa fabrication

(30) Priority: 29.08.2001 SE 0102863
(43) Date of publication of application: 21.12.2005
(62) Divisional of application: 02019363.7
(73) Proprietor: National Gummi AB, 30265 Halmstad (SE)
(72) Inventor: Dahlbom, Bo, 302 65 Halmstad (SE)
(74) Representative: Asketorp, Göran

(56) References cited:
- EP-A- 1 059 213
- GB-A- 760 378
- US-A- 4 638 525
- US-A- 5 716 699
- US-A- 5 802 662

## Description

### Technical Field

The present invention relates to a rubber profile, suitable for cleaning a pane, for example a wind screen or the like, comprising an edge for abutting the pane.

In addition, the present invention relates to a method for the manufacturing of a rubber profile according to the above-mentioned type.

### Background of the Invention

The manufacturing of wiper blades is generally performed by injection moulding rubber requiring a high-polished tool, especially produced for this purpose, which gives smooth components or products. A drawback of those existing wiper blades when used in windscreen wipers is that they present a high friction against the windscreen, which may lead to sound or squeaking. Another drawback is that they often have a low wear resistance and are worn out in short time resulting in that they have to be changed frequently, causing the car owner an additional cost. In wintertime there is also a problem regarding wiper blades frozen to the windscreen, when using commonly existing rubber qualities.

Extrusion of rubber is a well-known technology for the manufacturing of sealings or sealing strips. The manufacturing may be continuous, allowing a more cost-effective production for some products in comparison with manufacturing by injection moulding, and thus the result is less expensive products. Experiments have been made regarding production of wiper blades by means of extrusion. However, they have showed that it is difficult to get the edge or the surface abutting the windscreen sufficiently even or flat to smoothly sweep away water, snow or other precipitation or to satisfactory clean the windscreen.

Other experiments have been made with mixing powder of polytetrafluoro ethylene into the rubber to get an edge or a lip against the windscreen, which is smooth and hard and which has a low friction against the windscreen, however, this experiment did not reach the expected results regarding for example cleaning and high durability.

EP1059213 discloses a wiper blade of rubber for automobiles which is serviceable on a glass surface having a water-repellent coating film without destroying the coating film for a long time. The disclosed wiper blade has a lip portion made from a silicone rubber and which is provided on both side surfaces with a wiping layer coming into contact with the glass. However, the silicone rubber lip portion does not contact the glass surface itself as the wiping layers are formed as protrusions from the blade stem, i.e. they extend beyond an end surface of the lip portion. The side surface wiping layers consist of a specified deposition density of particles of silica, graphite and the like having a specified particle size distribution and are bonded to the side surface of the lip portion with a silicone rubber composition as in a coating layer of a cured silicone rubber containing the particles, in order not to wear out said coating film on the glass surface. The wiper blade is produced by compression molding and further steps, which is an expensive production method for mass produced articles in contrast to extrusion of rubber profiles.

GB760378 discloses a wiper blade having a shallow concave wiping end which meets two parallel side walls to form sharp wiping edges. The sharp edges directly contact a windshield and determine wear out of the wiper blade.

There are alternative injection moulded wiper blades for windscreen wipers containing two different qualities of rubber in one and the same blade. The wiper blade has a back of synthetic rubber for a silent function without sound having a spring ledge placed inside to get a more uniform pressure distribution, and having an extra hard lip of natural rubber against the windscreen for efficiently cleaning it. The drawback of this type of wiper blades is that they are expensive to produce without being specific durable.

One on the market recently launched wiper blade is made of injection moulded polytetrafluoro ethylene, a material with a very low friction and which due to its stiffness allows a good cleaning. A disadvantage is that polytetrafluoro ethylene is not durable and is also a very expensive material.

### Summary of the Invention

An object of the present invention is to remedy the drawbacks above and to provide a rubber profile and a manufacturing process thereof according to the appended patent claims.

In one embodiment of the present invention a rubber profile, such as a wiper blade, having a minimal friction against a pane, such as a windscreen, is provided, which has a high wear resistance and which efficiently cleans the pane, and a method for the manufacturing thereof, allowing a continuous manufacturing at a low cost.

A more specific object of the present invention is to manufacture a rubber profile according to the appended method claims.

According to an embodiment of this aspect of this invention a method for manufacturing a rubber profile, with an edge for abutment against a pane by extruding a rubber profile, which one both sides is coated by a polymeric layer during extrusion, is provided. The polymeric layer, consisting of ultra high molecular polyethylene, is integrated with the rubber during the extrusion, and the rubber profile, coated by polymeric layer, is then cured in a heating stove, whereupon the rubber profile is compressed in the transversal direction and is divided along a longitudinal axis. A concave surface arises in the cut, when the compression ceases, which on on at least one side has a polymeric layer having a sharp edge. After cutting the rubber profile provided with the at least one polymeric layer into individual lengths, the obtained rubber profile is mounted into a clamp or an yoke and is fastened for example on a vehicle, with the edges on both sides of the concave surface abutting a pane, such as a wind screen. The sharp polymeric edges allows a careful cleaning of the pane without noise or squeaking due to the low friction of the material against the pane, simultaneously the rubber profile has an elasticity because of the rubber core.

Other objectives, features and advantages of the present invention will appear from the following detailed description, the enclosed drawings and the claims.

### Brief Description of the Drawings

The invention will be disclosed in detail below, reference being made to the accompanying drawings, in which
FIG 1 shows a schematic perspective view of an extruded rubber profile provided with polymeric layers on both sides according to the invention,
FIG 2 shows a schematic side view of a wiper blade for a windscreen wiper,
FIG 3 shows a schematic side view of an arrangement for manufacturing a wiper blade,
Fig 4 shows a side view of a profile of a wiper blade , and
FIG 5 shows a side view of an extruded rubber profile according to FIG 4 before the longitudinal division of the rubber profile.

### Description of Embodiments of the Invention

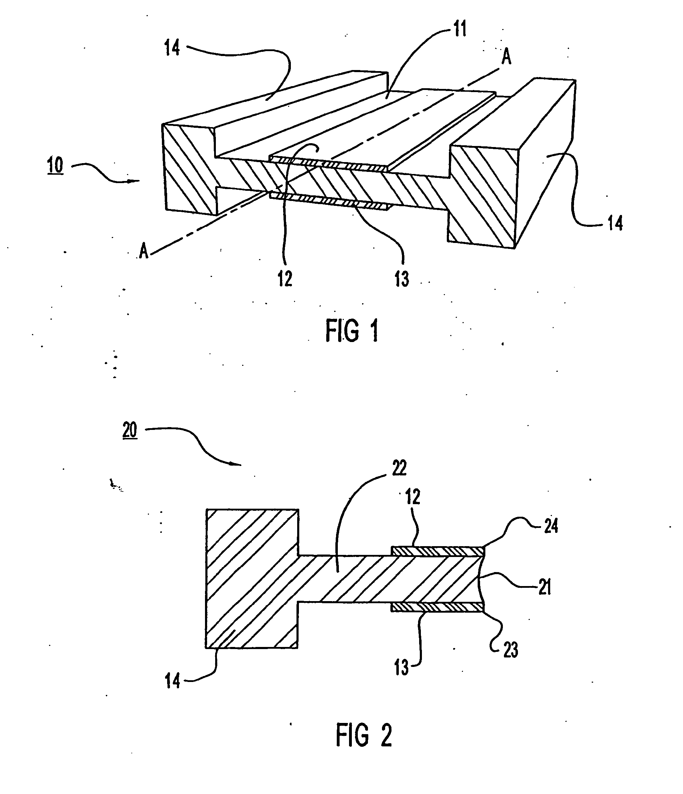

The extruded rubber profile 10, as shown in FIG 1, comprises a middle portion 11 that on its upper side and on its lower side has a thin polymeric layer 12 and 13, respectively, and has two outer portions 14, which each is adapted to be arranged into a not shown clamp or yoke. The material of the rubber profile 10 may for example be ethylene propylene rubber, which is ageing resistant and non-expensive material.

The rubber profile 10 is symmetrical around an axis A-A along which the rubber profile may be divided into two identical units 20, but it may also be unsymmetrical in respect to this division line. The unit 20 has a first portion 22, which is terminated in a concave surface 21 at one side and changes into a second portion 14 at the other side. The concave surface 21 is surrounded by polymer layers 23, 24 on both sides, which form sharp edges.

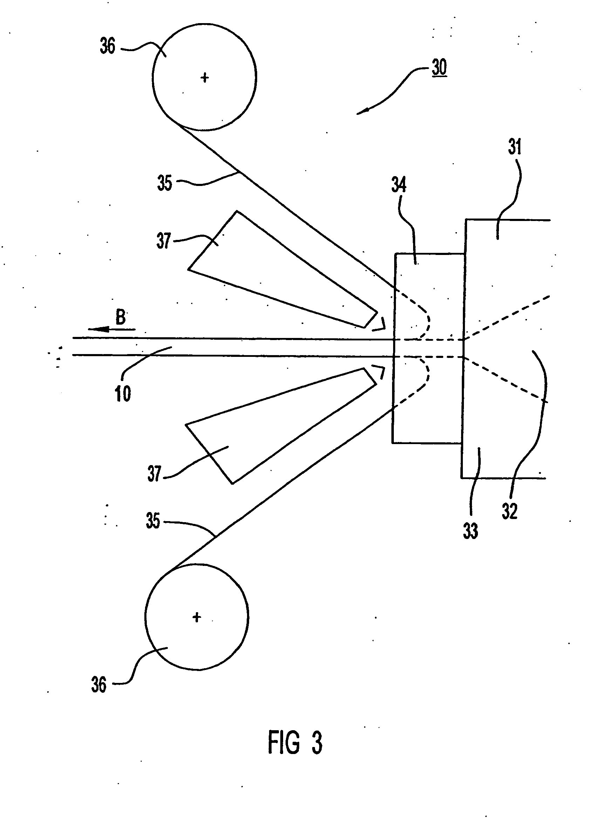

The method for manufacturing rubber profiles according to the invention will now be described in detail. FIG 3 shows an arrangement 30 for manufacturing a rubber profile according to the invention. In a first step, the rubber profile 10 is extruded by means of an extruder, the rubber 32 being passed from a head 33 of the extruder into a tool 34 giving the rubber profile 10 a specific shape, performed in a well known way for those skilled in the art. When the rubber profile 10 passes this tool 34 a polymeric foil 35, which is supplied into the tool 34 from a roll 36, is applied on the upper surface and on the lower surface, respectively, of the middle portion 11. The middle portion 11 of the rubber profile has a thickness of about 0.8-1mm, and the foils have a thickness of about 0.1mm. The foil coating is continuously made during the extrusion and with additional heat supply from hot air blowers 37 at a proportionately high temperature of about 170°C-180°C to cause the polymeric layers 12 and 13, respectively formed by the foil, to be integrated with the rubber in the middle portion 11. The polymeric material is an ultra high molecular polyethylene, since an ordinary polyethylene is not able to stand up to the required high temperature without melting. This particular polyethylene has a high wear resistance and a very low friction, and for those reasons it is especially suitable in this application. The manufacturing of the rubber profile provided with the polymeric layers 12 and 13, respectively, is performed continuously and the product is gradually fed forward in the direction of the arrow B. In a second step the rubber profile is cured at about 240°C in a well known way in a microwave equipment or a hot air oven, thereafter it is cooled down. In a third step the middle portion 11 is compressed in the transverse direction to about its half thickness and is divided along the longitudinal axis A-A, the two rubber profiles 20 being obtained. The rubber profile 20 strives to resume its shape when the compression ceases, and the concave surface 21 arises when the rubber in the portion 22 due to its elasticity creeps inwardly between the two polymeric layers 12 and 13, which because of their stiffness form well defined, sharp edges. In a fourth step the rubber profiles 20 are cut into appropriate lengths to individual wiper blades. The wiper blade is then arranged in a not shown clamp or yoke, the outer portion 14 being mounted into the clamp. The sharp edges 23, 24 of the polymeric layers on both sides of the concave surface 21 will abut against the windscreen and will efficiently clean the windscreen from dirt and precipitation. The wiper blade functions in a reciprocating way, similar to a brush movement; one of the polymeric edges of the wiper blade initially sweeps over the windscreen, then the other polymeric edge of the same wiper blade takes over - when the windscreen wiper changes direction - and continues the movement back to the original position.

An important advantage of the wiper blade according the invention is that it functions soundless since the friction against the windscreen is very low. Another advantage of the invention is that the continuous manufacturing of wiper blades by extrusion is very cost efficient and hence provides less expensive products in comparison with such products that are injection moulded. A further advantage is the high wear resistance due to the combination of ethylene propylene rubber and ultra high molecular polyethylene, which also provide a very good function regarding cleaning and which also during wintertime imply that the wiper blade will not freeze to the windscreen.

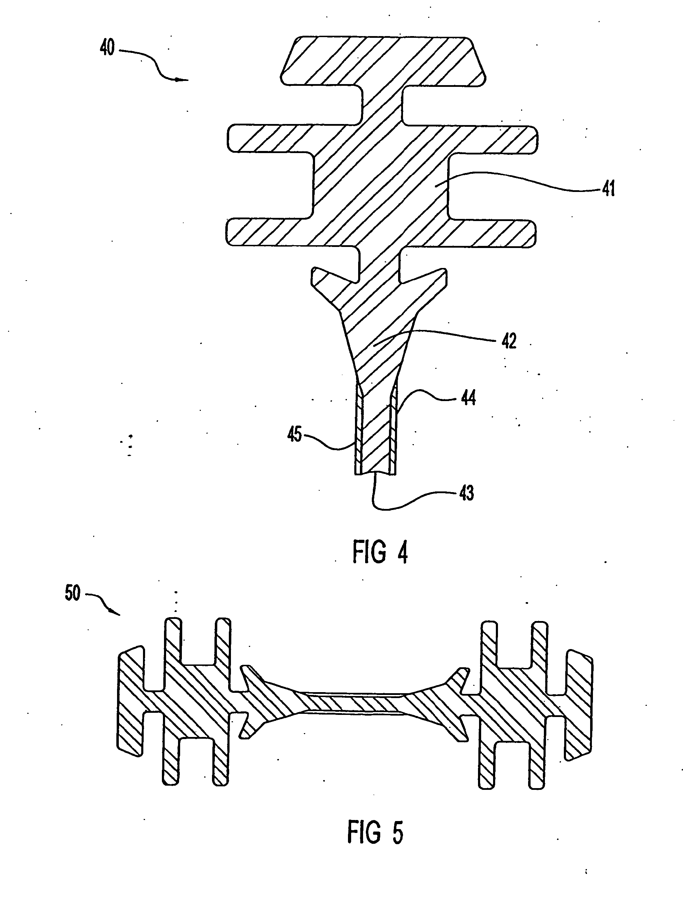

FIG 4 shows an alternate embodiment of a unit, which should be compared to the unit 20 and which comprises a second portion 41 having a totally different appearance than the other portion 14. Analogous to what has been described above, the unit 40 is one of two identical units that are formed after division of an extruded rubber profile 50 according FIG 5. A first portion 42 of the unit 40 has also another appearance than the first portion 21 of the unit 20, but is terminated at one end by a concave surface 43, which at both sides is surrounded by sharp edges from the polymeric layers 44, 45.

The present invention has been described as an example with reference to preferred embodiments according to FIG 1 and FIG 2, and FIG 3 and FIG 4, respectively, without being limited to these embodiments. Alternate embodiments than the above described may exist within the scope of the enclosed claims, as are easily realised by those skilled in the art. The appearance of the rubber profile may for example vary depending on its attaching in the clamp of the windscreen. The rubber profile can for example be shaped as a ball regarding the second portion 14 in applications where the requirements of the attaching are not so high, e.g. a wiper blade in an ordinary window scraper.

## Claims

1. A rubber profile (10, 20, 40, 50) having two sides, suitable for cleaning a pane,
wherein the rubber profile (10, 20, 40, 50) along an edge, between said sides, forms a concave edge surface (21, 43) between said sides of the rubber profile
**characterized in that** the rubber profile (10, 20, 40, 50) on both sides of the edge is coated by a polymeric layer (12, 13, 44, 45) of ultra high molecular polyethylene.

2. A rubber profile according to claim 1, **characterized in that** the polymeric layers (12, 13, 44, 45) form sharp edges on both sides of the concave edge surface (21, 43).

3. A method for manufacturing a rubber profile (10, 20, 40, 50), which on both sides is coated by a polymeric layer (12, 13, 44, 45), comprising:
- extruding the rubber profile (10, 20, 40, 50),
- applying the polymeric layers(12, 13, 44, 45) of ultra high molecular polyethylene, on both sides of the rubber profile (10, 20, 40, 50) during extrusion of the profile for integrating the polymeric layer (12, 13, 44, 45) with the rubber profile (10, 20, 40, 50),
compressing the rubber profile (10, 20, 40, 50) provided with the polymeric layers in the transversal direction of the both sides, and
dividing the compressed rubber profile (10, 20, 40, 50) along a longitudinal axis so that the rubber profile (10, 20, 40, 50) forms a concave surface (21, 43) in the division line, when the compression ceases.

4. A method according to claim 3, **characterized in that** the compression of the rubber profile (10, 20, 40, 50) provided with the polymeric layers is made to half the thickness of the profile (10, 20, 40, 50).

5. A method according to claim 3 to 4, **characterized in that** integrating the polymeric layer (12, 13, 44, 45) is performed during heat supply.

6. A method according to any of the claims 3 to 5, **characterized in that** each of the polymeric layers(12, 13, 44, 45) is applied as a foil (35), when the rubber profile (10, 20, 40, 50) passes through an extrusion tool (34) providing its profile, and that the heat supply is simultaneously done.

7. A method according to any of the claims 3 to 6, **characterized in that** the thickness of the foil (35) is about 0.1 mm.

8. A method according to any of the claims 3 to 7, **characterized by** the steps of curing the rubber profile (10, 20, 40, 50) provided with polymeric layers during heat supply and cutting the rubber profile (10, 20, 40, 50) across its width to provide individual rubber profiles of a specific length.

9. A method according to claim 3, comprising
passing the extruded rubber profile (10) from a head (33) of an extruder into a tool (34), thereby giving the rubber profile (10) a specific shape, and
applying a polymeric foil (35), which is supplied into the tool (34) from a roll (36).

10. A method according to claim 3 or 9, comprising
performing said manufacturing of the rubber profile provided with polymeric layers (12, 13) continuously.

11. A method according to claim 3, 9 or 10, wherein
said applying comprises coating said rubber profile continuously with a foil (35) at 170 to 180 °C, thereby integrating the foil (35) with the rubber profile.

12. A method according to claim 3, comprising
curing the rubber profile at about 240 °C.

## Patentansprüche

1. Gummiprofil (10, 20, 40, 50) mit zwei Seiten, geeignet für die Reinigung einer Scheibe,
- wobei das Gummiprofil (10, 20, 40, 50) entlang einer Schmalseite zwischen den besagten Seiten des Gummiprofils eine hohle kantenförmige Oberfläche (21, 43) bildet,
**dadurch gekennzeichnet, daß**
das Gummiprofil (10, 20, 40, 50) auf beiden Seiten der Schmalseite mit einer Polymerschicht (12, 13, 44, 45) aus ultrahochmolekularem Polyethylen beschichtet ist.

2. Gummiprofil nach Anspruch 1,
**dadurch gekennzeichnet, daß**
die Polymerschichten (12, 13, 44, 45) scharfe Kanten auf beiden Seiten der hohlen kantenförmigen Oberfläche (21, 43) bilden.

3. Verfahren zur Herstellung eines Gummiprofils (10, 20, 40, 50), das an beiden Seiten mit einer Polymerschicht (12, 13, 44, 45) beschichtet ist, **gekennzeichnet durch** folgende Verfahrensschritte:
- Extrudieren des Gummiprofils (10, 20, 40, 50),
- Auftragen der Polymerschichten (12, 13, 44, 45) aus ultrahochmolekularem Polyethylen, auf beiden Seiten des Gummiprofils (10, 20, 40, 50) während der Extrusion des Profils, um die Polymerschichten (12, 13, 44, 45) mit dem Gummiprofil (10, 20, 40, 50) verbinden,
- Komprimieren des mit den Polymerschichten beschichteten Gummiprofils (10, 20, 40, 50) in Querrichtung zu den beiden Seiten, und
- Teilen des gepressten Gummiprofils (10, 20, 40, 50) entlang einer Längsachse, so daß das Gummiprofil (10, 20, 40, 50) in der Teilungslinie eine hohle Oberfläche (21, 43) bildet, wenn die Kompression endet.

4. Verfahren nach Anspruch 3,
**dadurch gekennzeichnet, daß**
durch die Kompression des mit Polymer beschichteten Gummiprofils (10, 20, 40, 50) die Stärke des Profils (10, 20, 40, 50) halbiert wird.

5. Verfahren nach Anspruch 3 und 4,
**dadurch gekennzeichnet, daß**
das Auftragen der Polymerschichten (12, 13, 44, 45) unter Hitzeeinwirkung erfolgt.

6. Verfahren nach einem der Ansprüche 3 - 5,
**dadurch gekennzeichnet, daß**
jede der Polymerschichten (12, 13, 44, 45) als Folie (35) aufgetragen wird, wenn das Gummiprofil (10, 20, 40, 50) zur Profilbildung ein Extrusionswerkzeug (34) durchläuft und die Wärmezufuhr gleichzeitig erfolgt.

7. Verfahren nach einem der Ansprüche 3 - 6,
**dadurch gekennzeichnet, daß**
die Stärke der Folie (35) ungefähr 0,1 mm beträgt.

8. Verfahren nach einem der Ansprüche 3 - 7, **gekennzeichnet durch** folgende Verfahrensschritte:
- Vulkanisation des mit Polymer beschichteten Gummiprofils (10, 20, 40, 50) während der Wärmezufuhr und
- Schneiden des Gummiprofils (10, 20, 40, 50) in Querrichtung zur Herstellung individueller Gummiprofile einer bestimmten Länge.

9. Verfahren nach Anspruch 3, **gekennzeichnet durch** folgende Verfahrensschritte:
- Einführen des aus dem Kopfteil (33) eines Extruders extrudierten Gummiprofils (10) in ein Werkzeug (34), wodurch das Gummiprofil (10) in eine bestimmte Form gebracht wird, und
- Auftragen der Polymerfolie (35), die in das Werkzeug (34) von einer Rolle (36) gefördert wird.

10. Verfahren nach einem der Ansprüche 3 oder 9,
**dadurch gekennzeichnet, daß**
die Herstellung des mit Polymer (12, 13) beschichteten Gummiprofils kontinuierlich erfolgt.

11. Verfahren nach einem der Ansprüche 3, 9 oder 10,
**dadurch gekennzeichnet, daß**
das besagte Auftragen die kontinuierliche Beschichtung des besagten Gummiprofils mit einer Folie (35) bei einer Temperatur zwischen 170°C und 180°C umfaßt und dabei die Folie (35) in Verbindung mit dem Gummiprofil gebracht wird.

12. Verfahren nach Anspruch 3,
**dadurch gekennzeichnet, daß**
die Vulkanisation des Gummiprofils bei ungefähr 240 °C erfolgt.

## Revendications

1. Profilé en caoutchouc (10, 20, 40, 50) ayant deux côtés, adapté pour nettoyer une vitre,
dans lequel le profilé de caoutchouc (10, 20, 40, 50) le long d'un bord, entre lesdits côtés, forme une surface à bords concaves (21, 43) entre lesdits côtés du profilé de caoutchouc,
**caractérisé en ce que** le profilé de caoutchouc (10, 20, 40, 50) des deux côtés du bord est revêtu d'une couche polymère (12, 13, 44, 45) de polyéthylène de masse moléculaire ultra-élevée.

2. Profilé de caoutchouc selon la revendication 1,
**caractérisé en ce que** les couches polymères (12, 13, 44, 45) forment des arêtes vives des deux côtés de la surface à bords concaves (21, 43).

3. Procédé de fabrication d'un profilé de caoutchouc (10, 20, 40, 50) qui est revêtu des deux côtés d'une couche polymère (12, 13, 44, 45) comprenant :
- l'extrusion du profilé de caoutchouc (10, 20, 40, 50)
- l'application des couches polymères (12, 13, 44, 45) de polyéthylène de masse moléculaire ultra-élevée, des deux côtés du profilé de caoutchouc (10, 20, 40, 50) pendant l'extrusion du profilé pour intégrer les couches polymères (12, 13, 44, 45) au profilé en caoutchouc (10, 20, 40, 50),
- la compression du profilé en caoutchouc (10, 20, 40, 50) doté des couches polymères dans le sens transversal des deux côtés, et
- la division du profilé de caoutchouc comprimé (10, 20, 40, 50) le long d'un axe longitudinal, de sorte que le profilé de caoutchouc (10, 20, 40, 50) forme une surface concave (21, 43) dans la ligne de division, quand la compression cesse.

4. Procédé selon la revendication 3, **caractérisé en ce que** la compression du profilé de caoutchouc (10, 20, 40, 50) doté des couches polymères est réalisée pour réduire de moitié l'épaisseur du profilé (10, 20, 40, 50).

5. Procédé selon la revendication 3 ou 4, **caractérisé en ce que** l'intégration des couches polymères (12, 13, 44, 45) est réalisée au cours d'un apport de chaleur.

6. Procédé selon l'une quelconque des revendications 3 à 5, **caractérisé en ce que** chacune des couches polymères (12, 13, 44, 45) est appliquée sous forme de feuille (35), quand le profilé de caoutchouc (10, 20, 40, 50) passe à travers l'outil d'extrusion (34) fournissant son profilé, et que l'apport de chaleur est simultanément réalisé.

7. Procédé selon l'une quelconque des revendications 3 à 6, **caractérisé en ce que** l'épaisseur de la feuille (35) est d'environ 0,1 mm.

8. Procédé selon l'une quelconque des revendications 3 à 7, **caractérisé par** les phases de séchage du profilé de caoutchouc (10, 20, 40, 50) doté de couches polymères pendant l'apport de chaleur et de découpe du profilé de caoutchouc (10, 20, 40, 50) à travers sa largeur pour fournir des profilés de caoutchouc individuels d'une longueur spécifique.

9. Procédé selon la revendication 3, comprenant :
le passage du profilé de caoutchouc extrudé (10) d'une tête (33) d'une extrudeuse dans un outil (34), en donnant ainsi au profilé de caoutchouc (10) une forme spécifique, et
l'application d'une feuille polymère (35), qui est fournie dans l'outil (34) depuis un rouleau (36).

10. Procédé selon la revendication 3 ou 9, comprenant la réalisation de ladite fabrication du profilé de caoutchouc doté de couches polymères (12, 13) de façon continue.

11. Procédé selon 1 revendication 3, 9 ou 10, dans lequel ladite application comprend le revêtement en continu dudit profilé de caoutchouc avec une feuille (35) à 170 à 180 °C, en intégrant ainsi la feuille (35) avec le profilé de caoutchouc.

12. Procédé selon la revendication 3, comprenant le séchage du profilé de caoutchouc à environ 240 °C.
